# EUROPEAN PATENT APPLICATION

(11) **EP 4 752 536 A1**
(43) Date of publication of application: **03.06.2026**
(21) Application number: 25826978.6
(22) Date of filing: 27.03.2025
(51) Int. Cl.: G01N 21/88, G01N 21/359, H01M 10/04

(54) **UNIT CELL INSPECTION DEVICE AND UNIT CELL INSPECTION METHOD USING SAME**

(30) Priority: 27.06.2024 KR 20240084141; 28.08.2024 KR 20240115915
(71) Applicant: LG Energy Solution, Ltd., Seoul 07335 (KR)
(72) Inventor: LEE, Bo Ram, Daejeon 34122 (KR); AHN, Ji Hoon, Daejeon 34122 (KR); KIM, Tae Hee, Daejeon 34122 (KR)
(74) Representative: Goddar, Heinz J.
(86) International application number: PCT/KR2025/095126
(87) International publication number: WO 2026/005562

(57) **Abstract**

Disclosed are a unit cell inspection apparatus for inspecting whether a burr has occurred on a cut surface of a unit cell, the unit cell inspection apparatus including a support unit configured to allow the unit cell to be seated thereon, a first image capture unit configured to capture an image of an upper surface of an edge of the unit cell, and a second image capture unit configured to capture an image of a side surface of the edge of the unit cell, and a unit cell inspection method using the same.

## Description

### [Technical Field]

This application claims the benefit of priority to Korean Patent Application No. 10-2024-0084141 filed on June 27, 2024 and Korean Patent Application No. 10-2024-0115915 filed on August 28, 2024, the disclosure of which is incorporated herein by reference in its entirety.

The present invention relates to a unit cell inspection apparatus and a unit cell inspection method using the same, and more particularly to a unit cell inspection apparatus for inspecting whether a burr has occurred on a cut surface of a unit cell and a unit cell inspection method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A positive electrode and a negative electrode may be stacked such that a separator is interposed therebetween to manufacture a monocell, and a plurality of monocells may be stacked or the monocell may be wound to manufacture an electrode assembly.

A unit positive electrode cut from a positive electrode sheet may be attached to a separator sheet, a unit negative electrode cut from a negative electrode sheet may be attached to another separator sheet, and the separator sheet having the unit positive electrode attached thereto and the separator sheet having the unit negative electrode attached thereto may be stacked, heated, and pressed to manufacture a monocell.

At this time, a burr that exposes a positive electrode foil, which is a current collector, on the cut vertical section may occur due to cutting defects of the cut unit positive electrode, and the separator may be broken by the burr, leading to secondary battery failure.

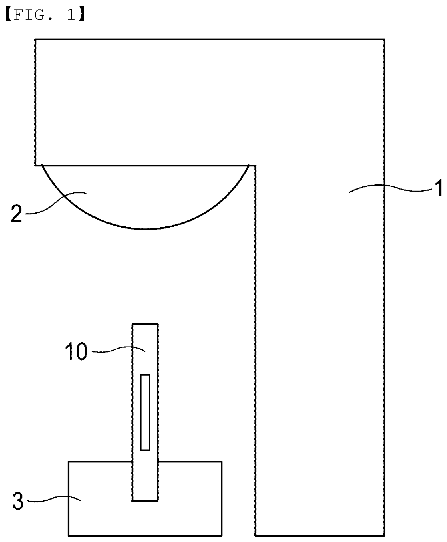

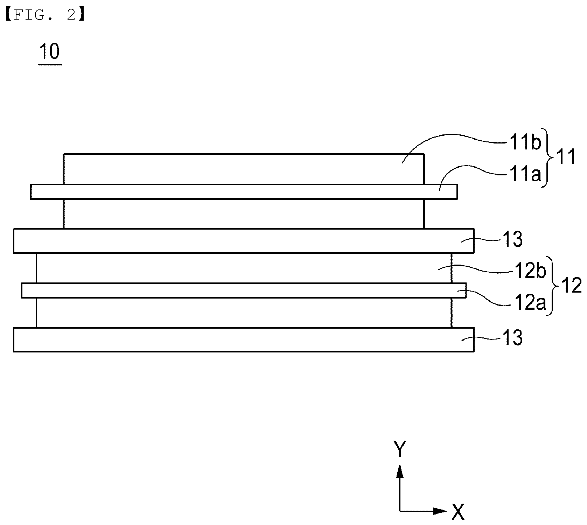

FIG. 1 is a conceptual view illustrating a conventional unit cell inspection apparatus, and FIG. 2 is a side view illustrating a monocell structure.

As shown in FIGs. 1 and 2, a monocell, which is an example of a unit cell 10 configured such that a positive electrode 11, a separator 13, a negative electrode 12, and a separator 13 are sequentially stacked, is seated vertically on a jig 3 such that a side surface thereof is visible, and the side surface of the monocell is inspected using a microscope 1 and a lighting device 2.

For the conventional unit cell inspection apparatus, it is substantially impossible to inspect all produced monocells because the monocells must be vertically seated on the jig 3.

In addition, the inspection results may be unreliable because an operator must visually determine whether a burr has occurred on a current collector, and the inspection process is time-consuming.

### (Prior Art Document)

(Patent Document 1) Korean Patent Application Publication No. 10-2019-0114322

### [Disclosure]

### [Technical Problem]

The present invention has been made in view of the above problems, and it is an object of the present invention to provide a unit cell inspection apparatus capable of accurately and quickly checking whether a burr has occurred in a unit cell including a monocell, and a unit cell inspection method using the same.

### [Technical Solution]

As a technical means for achieving the above object, a unit cell inspection apparatus according to an embodiment of the present invention, which is a unit cell inspection apparatus for inspecting whether a burr has occurred on a cut surface of a unit cell (10), includes a support unit (100) configured to allow the unit cell (10) to be seated thereon, a first image capture unit (200) configured to capture an image of an upper surface of an edge of the unit cell (10), and a second image capture unit (300) configured to capture an image of a side surface of the edge of the unit cell (10).

Also, in the unit cell inspection apparatus according to the embodiment of the present invention, the first image capture unit (200) may include a first camera unit (210) configured to capture the image of the upper surface of the edge of the unit cell (10), the second image capture unit (300) may include a second camera unit (310) configured to capture the image of the side surface of the edge of the unit cell (10), and the unit cell inspection apparatus may include at least one of a first lighting unit (220) configured to provide light toward the upper surface of the edge of the unit cell (10) and a second lighting unit (320) configured to provide light toward the side surface of the edge of the unit cell (10).

Also, in the unit cell inspection apparatus according to the embodiment of the present invention, the second camera unit (310) may be disposed at an acute angle to the side surface of the edge of the unit cell (10).

Also, in the unit cell inspection apparatus according to the embodiment of the present invention, each of the first lighting unit (220) and the second lighting unit (320) may include a near-infrared (NIR) lighting device.

Also, in the unit cell inspection apparatus according to the embodiment of the present invention, each of the first lighting unit (220) and the second lighting unit (320) may include a lighting device configured to emit a wavelength of 840 to 950 nm.

Also, in the unit cell inspection apparatus according to the embodiment of the present invention, the first lighting unit (220) may be coaxially installed at the first camera unit (210), and the second lighting unit (320) may be coaxially installed at the second camera unit (310).

Also, in the unit cell inspection apparatus according to the embodiment of the present invention, each of the first camera unit (210) and the second camera unit (310) may be provided with a filter configured to allow near-infrared (NIR) light to pass therethrough.

Also, in the unit cell inspection apparatus according to the embodiment of the present invention, the filter may transmit a wavelength of 840 to 950 nm.

Also, in the unit cell inspection apparatus according to the embodiment of the present invention, the support unit (100) may be a conveyor.

Also, the unit cell inspection apparatus according to the embodiment of the present invention may further include a controller (400) configured to inspect whether the unit cell (10) is defective based on information received from the first image capture unit (200) and the second image capture unit (200).

Also, in the unit cell inspection apparatus according to the embodiment of the present invention, the information received from the first image capture unit and the second image capture unit may be at least one of whether a burr has occurred on a side surface and/or an upper surface of an edge of a positive electrode (11), the length of the burr, the area of the burr, and the direction of the burr.

Also, in the unit cell inspection apparatus according to the embodiment of the present invention, the unit cell (10) may be any one of a monocell, an A-type bi-cell, a C-type bi-cell, and a half-cell.

In addition, a unit cell inspection method using the unit cell inspection apparatus according to the embodiment of the present invention includes (S1) seating a unit cell (10) on the support unit (10), (S2) capturing an image of the unit cell (10) through the first image capture unit (200) and the second image capture unit (300), and (S3) inspecting whether the unit cell (10) is defective through the controller (400).

Also, in the unit cell inspection method according to the embodiment of the present invention, in step (S3), whether the unit cell is defective may be determined by comparing at least one of whether a burr has occurred, the length of the burr, the area of the burr, and the direction of the burr to a reference value.

### [Advantageous Effects]

As is apparent from the above description, a unit cell inspection apparatus according to the present invention and a unit cell inspection method using the same have the advantage that the unit cell inspection apparatus includes a first image capture unit configured to capture an image of an upper surface of an edge of a unit cell and a second image capture unit configured to capture an image of a side surface of the edge of the unit cell, whereby information about the upper surface and the side surface of the edge of the unit cell may be simultaneously obtained, and therefore it is possible to accurately inspect whether a burr has occurred on a cut surface of the unit cell.

In addition, the unit cell inspection apparatus according to the present invention and the unit cell inspection method using the same have the merit that each of a first lighting unit and a second lighting unit includes a near-infrared (NIR) lighting device and each of the first camera unit and the second camera unit is provided with a filter configured to allow near-infrared (NIR) light to pass therethrough, whereby visibility of the unit cell is improved, and as a result, inspection may be rapidly yet accurately performed.

### [Description of Drawings]

FIG. 1 is a conceptual view illustrating a conventional unit cell inspection apparatus.
FIG. 2 is a side view illustrating a monocell structure.
FIG. 3 is a side view illustrating an A-type bi-cell structure.
FIG. 4 is a side view illustrating a C-type bi-cell structure.
FIG. 5 is a side view illustrating a half-cell structure.
FIG. 6 is a schematic view illustrating a unit cell inspection apparatus according to a first embodiment of the present invention.
FIG. 7 is a schematic view illustrating a unit cell inspection apparatus according to a second embodiment of the present invention.
FIG. 8 is a schematic view illustrating a unit cell inspection apparatus according to a third embodiment of the present invention.
FIG. 9 is a flowchart illustrating a unit cell inspection method using the unit cell inspection apparatus according to the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a unit cell inspection apparatus according to the present invention and a unit cell inspection method using the same will be described.

A unit cell refers to a monocell, an A-type bi-cell, a C-type bi-cell, and a half-cell, but also includes various modified stacked cells not mentioned above.

For example, referring to FIG. 2, which is a side view illustrating a monocell structure, a monocell, which is an example of a unit cell 10, may include a positive electrode 11, a separator 13, a negative electrode 12, and a separator 13, which are sequentially stacked from above in a downward direction.

The positive electrode 11 includes a positive electrode current collector 11a and a positive electrode material 11b applied to each of an upper surface and a lower surface of the positive electrode current collector 11a.

Here, the positive electrode current collector 11a may include aluminum; however, the present invention is not necessarily limited thereto.

In addition, the positive electrode material 11b may be mixed with a positive electrode active material, a conductive agent, and a binder, and a filler may be further added as needed.

The negative electrode 12 includes a negative electrode current collector 12a and a negative electrode material 12b applied to each of a lower surface and an upper surface of the negative electrode current collector 12a.

Here, the negative electrode current collector 12a may include copper; however, the present invention is not necessarily limited thereto.

In addition, the negative electrode material 12b may be further mixed with a negative electrode active material, a conductive agent, and a binder, and the negative electrode current collector may be coated with the mixture.

The separator 13 is interposed between the negative electrode 12 and the positive electrode 11 to prevent short circuit therebetween and to allow only migration of lithium ions. It is preferable for the separator 13 to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, for a monocell, a positive electrode 11 is cut and stacked on an upper surface of a separator 13, and a negative electrode 12 is cut and stacked on an upper surface of another separator 13. In addition, the separator 13 on which the positive electrode 11 is stacked is stacked on the upper surface of the separator 13 on which the negative electrode 12 is stacked (i.e., an upper surface of the negative electrode 12). As a result, the positive electrode 11, the separator 13, the negative electrode 12, and the separator 13 are sequentially stacked from above in the downward direction, and the separator 13 between the positive electrode 11 and the negative electrode 12 may be cut to manufacture a monocell; however, the present invention is not necessarily limited thereto.

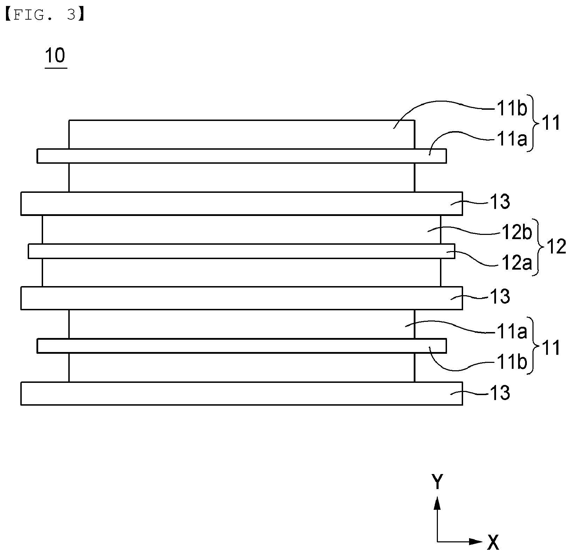

In addition, referring to FIG. 3, which is a side view illustrating an A-type bi-cell structure, an A-type bi-cell, which is another example of the unit cell 10, may include a positive electrode 11, a separator 13, a negative electrode 12, a separator 13, a positive electrode 11, and a separator 13, which are sequentially stacked from above in the downward direction.

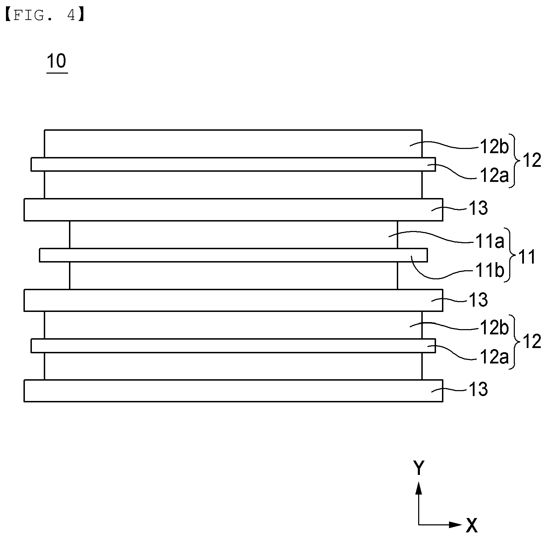

In addition, referring to FIG. 4, which is a side view illustrating a C-type bi-cell structure, a C-type bi-cell, which is another example of the unit cell 10, may include a negative electrode 12, a separator 13, a positive electrode 11, a separator 13, a negative electrode 12, and a separator 13, which are sequentially stacked from above in the downward direction.

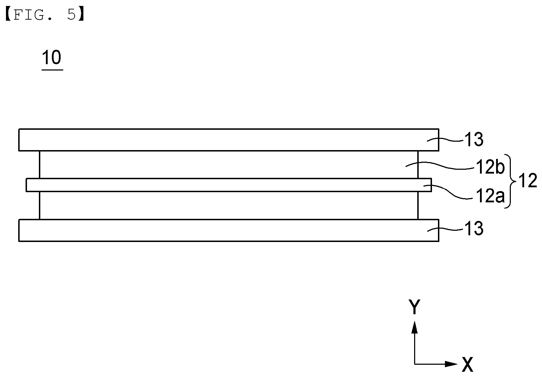

In addition, referring to FIG. 5, which is a side view illustrating a half-cell structure, a half-cell, which is another example of the unit cell 10, may be configured such that a negative electrode 12 is interposed between a pair of separators 13, i.e., a separator 13, a negative electrode 12, and a separator 13 are sequentially stacked from above in the downward direction.

The negative electrode, the separator, and the positive electrode constituting the A-type bi-cell, C-type bi-cell, or the half-cell are as described with reference to FIG. 2, and therefore a duplicate description will be omitted.

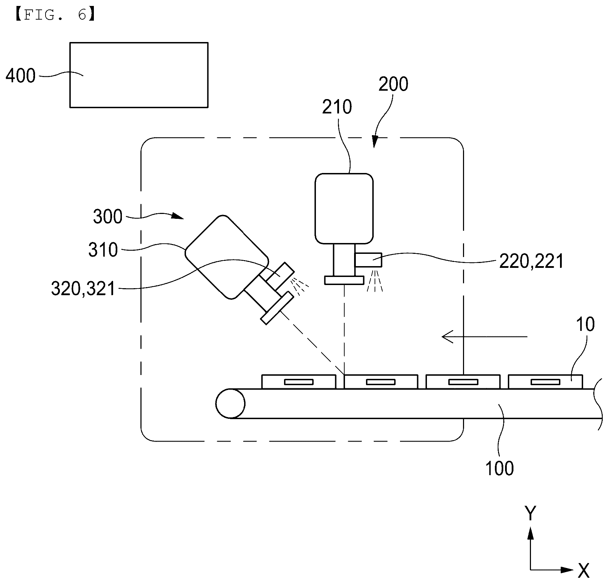

FIG. 6 is a schematic view illustrating a unit cell inspection apparatus according to a first embodiment of the present invention.

Referring to FIGs. 2 to 6, a unit cell inspection apparatus for inspecting whether a burr has occurred on a cut surface of the unit cell 10 having the aforementioned configuration may include a support unit 100, a first image capture unit 200, a second image capture unit 300, and a controller 400.

First, the support unit 100 may be configured to allow the unit cell 10 to be seated thereon. At this time, the unit cell 10 may be seated in a horizontal direction. Here, the horizontal direction is a direction (X-axis direction) orthogonal to a stacking direction (Y-axis direction) of the unit cell 10.

The support unit 100 may be a conveyor, and may be configured to move the unit cell 10 seated on an upper side (12 o'clock direction in FIG. 3) to one side (9 o'clock direction in FIG. 3).

The first image capture unit 200 may be configured to capture an image of an upper surface of an edge of the unit cell 10. Here, the upper surface of the edge of the unit cell 10 may be the upper surface of the edge on a long side of the unit cell 10.

More specifically, the first image capture unit 200 may be disposed upwardly spaced apart from the support unit 100 on which the unit cell 10 is seated, and may be configured to capture an image of the upper surface of the edge of the unit cell 10. The first image capture unit 200 may include a first camera unit 210 and a first lighting unit 220.

First, the first camera unit 210 may be disposed in the vertical direction (Y-axis direction) orthogonal to the horizontal direction of the unit cell 10 in order to capture an image of the upper surface of the edge of the unit cell 10.

For example, the first camera unit 210 may include a camera having 25M (5120×5120 pixels) or more pixels and a pixel size of 1 to 4.5 µm. In another example, the first camera unit 210 may include a camera having a pixel size of 1 to 5 µm with a lens having a magnification of 1x to 5x.

However, the first camera unit 210 is not limited thereto, and camera units with various specifications may be used depending on the specification to be detected. In this case, the first camera unit 210 may select 1/5 to 1/10 of the specification to be detected as a pixel resolution such that the inspection specification and the coating amount of an active material can be inferred.

The first camera unit 210 may be provided with a filter through which near-infrared (NIR) light, which is a long wavelength, passes. More specifically, the filter may be a filter that transmits a wavelength of 840 to 950 nm, which is within the wavelength range of near-infrared (NIR) light of 750 to 3000 nm.

Meanwhile, information about the upper surface of the edge of the unit cell 10 image-captured by the first camera unit 210, such as whether a burr has occurred, the length of the burr, the area of the burr, and the direction of the burr, may be provided to the controller 400.

Here, the burr image-captured by the first camera unit 210 may be a horizontal burr. In this case, the horizontal burr is a burr that protrudes from the positive electrode current collector 11a and is formed horizontally when the unit cell 10 is viewed from above.

The first lighting unit 220 may be configured to provide light toward the upper surface of the edge of the unit cell 10. The first lighting unit 220 may include a 1a lighting unit 221 that is coaxially installed at the first camera unit 210 and disposed in the vertical direction (Y-axis direction) orthogonal to the horizontal direction of the unit cell 10.

Here, the first lighting unit 220 may include a lighting device configured to radiate near-infrared (NIR) light. More specifically, the first lighting unit 220 may include a lighting device configured to radiate a wavelength of 840 to 950 nm, which is within the wavelength range of near-infrared (NIR) light of 750 to 3000 nm.

Accordingly, the first lighting unit 220 may provide light having a wavelength of near-infrared (NIR) light toward the upper surface of the edge of the unit cell 10, and the first camera unit 210 may capture an image of the upper surface of the edge of the unit cell 10 illuminated with light having a wavelength of near-infrared (NIR) light through the first lighting unit 220.

Visibility of the positive electrode current collector 11a, the positive electrode material 11b, and the separator 13 of the unit cell 10 may be improved by the provision of the first camera unit 210 and the first lighting unit 220, whereby the boundaries thereof may be distinguished more accurately. In particular, due to the difference in reflectivity between the positive electrode material 11b and the positive electrode current collector 11a, an image of the positive electrode current collector 11a may be relatively clearly captured, whereby accurate information regarding the burr may be obtained.

The second image capture unit 300 may be configured to capture an image of a side surface of the edge of the unit cell 10. Here, the side surface of the edge of the unit cell 10 may be the side surface of the edge on the long side of the unit cell 10.

More specifically, the second image capture unit 300 may be disposed upwardly spaced apart from the support unit 100 on which the unit cell 10 is seated, and may be configured to capture an image of the side surface of the edge of the unit cell 10.

The second image capture unit 300 may include a second camera unit 310 and a second lighting unit 320.

First, the second camera unit 310 may be configured to capture an image of the side surface of the edge of the unit cell 10, and the second camera unit 310 may be disposed at an acute angle, such as 40° to 50°, to the side surface of the edge of the unit cell 10. More preferably, the second camera unit 310 may be disposed at an inclination of 45° with respect to the side surface of the edge of the unit cell 10.

In this case, the second camera unit 310 may be disposed at an inclination of 45° in one direction in which the support unit 100 moves the unit cell 10 (9 o'clock direction in FIG. 3). That is, the second camera unit 310 may be disposed to capture an image of the side surface of the edge on one side in one direction in which the unit cell 10 is moved.

For example, the second camera unit 310 may include a camera having 25M (5120×5120 pixels) or more pixels and a pixel size of 1 to 4.5 µm. In another example, the first camera unit 210 may include a camera having a pixel size of 1 to 5 µm with a lens having a magnification of 1x to 5x.

However, the second camera unit 310 is not limited thereto, and camera units with various specifications may be used depending on the specification to be detected. In this case, the second camera unit 310 may select 1/5 to 1/10 of the specification to be detected as a pixel resolution such that the inspection specification and the coating amount of an active material can be inferred.

In addition, the second camera unit 310 may be provided with a filter through which near-infrared (NIR) light, which is a long wavelength, passes. More specifically, the filter may be a filter that transmits a wavelength of 840 to 950 nm, which is within the wavelength range of near-infrared (NIR) light of 750 to 3000 nm.

Meanwhile, information about the side surface of the edge of the unit cell 10 image-captured by the second camera unit 310, such as whether a burr has occurred, the length of the burr, the area of the burr, and the direction of the burr, may be provided to the controller 400.

Here, the burr image-captured by the second camera unit 310 may be a vertical burr. In this case, the vertical burr is a burr that protrudes from the positive electrode current collector 11a and is formed vertically when the unit cell 10 is viewed from the side.

The second lighting unit 320 may be configured to provide light toward the side surface of the edge of the unit cell 10. The second lighting unit 320 may include a 2a lighting unit 321 that is coaxially installed at the second camera unit 310 and disposed at an acute angle, such as 40° to 50°, to the side surface of the edge of the unit cell 10.

Here, the second lighting unit 320 may include a lighting device configured to radiate near-infrared (NIR) light. More specifically, the second lighting unit 320 may include a lighting device configured to radiate a wavelength of 840 to 950 nm, which is within the wavelength range of near-infrared (NIR) light of 750 to 3000 nm.

Accordingly, the second lighting unit 320 may provide light having a wavelength of near-infrared (NIR) light toward the side surface of the edge of the unit cell 10, and the second camera unit 310 may capture an image of the side surface of the edge of the unit cell 10 radiated by light having a wavelength of near-infrared (NIR) light through the second lighting unit 320.

Visibility of the positive electrode current collector 11a, the positive electrode material 11b, and the separator 13 of the unit cell 10 may be improved by the provision of the second camera unit 310 and the second lighting unit 320, whereby the boundaries thereof may be distinguished more accurately. In particular, due to the difference in reflectivity between the positive electrode material 11b and the positive electrode current collector 11a, an image of the positive electrode current collector 11a may be relatively clearly captured, whereby accurate information regarding the burr may be obtained.

If only one of the first image capture unit 200 and the second image capture unit 300 is provided, only the burr formed in the horizontal direction or the burr formed in the vertical direction may be detected from the positive electrode current collector 11a, and therefore it is preferable to provide both the first image capture unit 200 and the second image capture unit 300 in order to obtain highly reliable information.

Meanwhile, the controller 400 may inspect whether the unit cell 10 is defective based on the information received from the first image capture unit 200 and the second image capture unit 300. In this case, the information that the controller 400 receives from the first image capture unit 200 and the second image capture unit 300 may be the upper surface and the side surface of the edge of the positive electrode 11 of the unit cell 10 image-captured by the first camera unit 210 and the second camera unit 310, respectively.

In addition, the controller 400 may receive information about the horizontal burr from the first camera unit 200, and may receive information about the vertical burr from the second camera unit 300.

Whether the unit cell 10 is defective may be determined from the burr formed on the side surface of the edge of the positive electrode current collector 11a of the unit cell 10.

For example, the controller 400 may measure whether the burr has occurred, the length of the burr, the area of the burr, the direction of the burr, and the like using the brightness deviation (GV deviation, gray value) between the burr and the positive electrode material 11b. At this time, since the burr is brighter than the active material of the positive electrode material 11b, the GV value per pixel may be measured relatively high.

For example, if a vertical burr of 5 µm or more is detected using an optical system with a resolution of 1 µm per image pixel, when the average GV value for the burr is 180 and a pixel with a GV value of 180 or more is counted five consecutive times in an upward-downward direction of the image, it may be determined that a burr has occurred, and the length, area, etc. of the burr may be measured.

At this time, the controller 400 may preset a reference value (e.g., the length, area, and direction of the burr) for the burr formed on the positive electrode current collector 11a, and may determine whether the burr has been formed on the positive electrode current collector 11a (defective) by comparing the upper surface and the side surface of the edge of the unit cell 10 image-captured by the first image capture unit 200 and the second image capture unit 300 with the preset reference value, thereby determining whether the unit cell 10 is defective.

In other words, if the measurement results transmitted from the first image capture unit 200 and the second image capture unit 300 deviate from the preset reference value for the burr, the unit cell 10 may be determined to be defective.

In another example, the controller 400 may determine whether the unit cell 10 is defective using a deep learning function. For example, the controller 400 may learn to discern a normal region that has no burr through deep learning, and upon receiving an image that has a singularity that is different from the learned image from the first image capture unit 200 and the second image capture unit 00, may determine that a burr has occurred.

In addition, the controller 400 may determine whether the unit cell 10 is defective using the deep learning function, and upon determining that a burr has occurred, may determine whether the unit cell 10 is defective by measuring the length, area, direction, etc. of the burr using the brightness deviation (GV deviation, gray value) between the burr and the positive electrode material 11b.

Meanwhile, the controller 400 performs overall control such that each component can normally function. The controller 400 may be implemented in the form of hardware, software, or a combination of hardware and software. The controller 400 may be implemented in a variety of forms that are obvious to those skilled in the art.

The controller 400 may obtain information about the burr in the vertical direction and the horizontal direction in which the burr may occur on the side surface of the edge of the positive electrode current collector 11a of the unit cell 10 from the first image capture unit 200 and the second image capture unit 300, and when the information obtained through the first image capture unit 200 and the information obtained through the second image capture unit 300 are combined, it may be possible to measure and determine the burr in a 3D form.

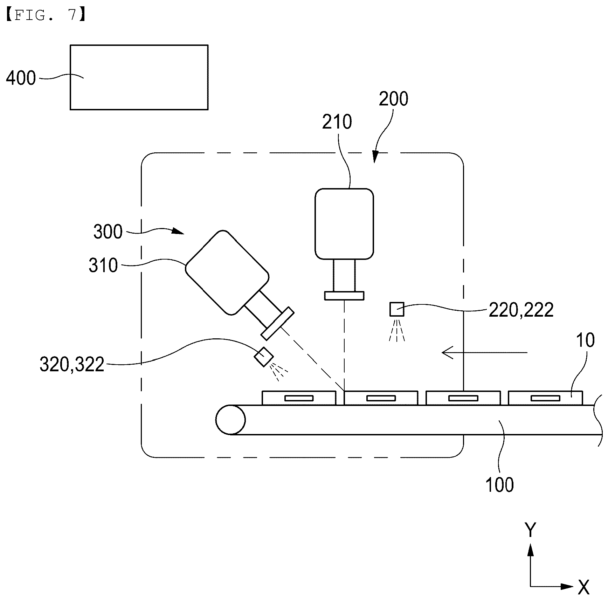

FIG. 7 is a schematic view illustrating a unit cell inspection apparatus according to a second embodiment of the present invention.

The unit cell inspection apparatus according to the second embodiment of the present invention includes a support unit 100, a first image capture unit 200, a second image capture unit 300, and a controller 400, in the same manner as the first embodiment.

However, in the second embodiment, each of a first lighting unit 220 and a second lighting unit 320 may not be coaxially fixed to a camera unit but may be fixed by a separate support member (not shown), unlike the first embodiment. Of course, even if each of the first lighting unit 220 and the second lighting unit 320 is not coaxially fixed to the camera unit, it is obvious that near-infrared (NIR) light should be radiated to each of the upper surface and the side surface of the edge of the unit cell 10.

Of course, only one of the first lighting unit 220 and the second lighting unit 320 may be provided, provided that the amount of light sufficient to capture an image of each of the upper surface and the side surface of the edge of the unit cell 10 is secured, and this is equally applicable to the first embodiment.

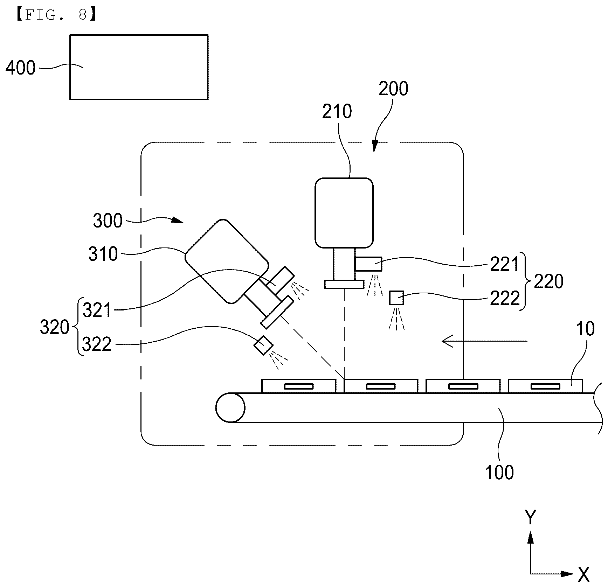

FIG. 8 is a schematic view illustrating a unit cell inspection apparatus according to a third embodiment of the present invention.

The unit cell inspection apparatus according to the third embodiment of the present invention includes a support unit 100, a first image capture unit 200, a second image capture unit 300, and a controller 400, in the same manner as the first and second embodiments.

However, in the third embodiment, a first lighting unit 220 may include both a 1a lighting unit 221 and a 1b lighting unit 222, and a second lighting unit 320 may include both a 2a lighting unit 321 and a 2b lighting unit 322, unlike the first and second embodiments.

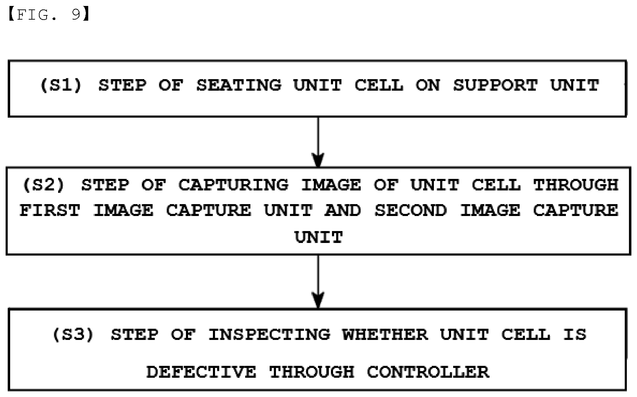

FIG. 9 is a flowchart illustrating a unit cell inspection method using the unit cell inspection apparatus according to the present invention.

Referring to FIGs. 2 to 6 and 9, the unit cell inspection method using the unit cell inspection apparatus according to the present invention includes (S1) seating a unit cell 10 on the support unit 100, (S2) capturing an image of the unit cell 10 through the first image capture unit 200 and the second image capture unit 300, and (S3) inspecting whether the unit cell 10 is defective through the controller 400.

In step (S1), the support unit 100 may move the unit cell 10 seated thereon to one side (9 o'clock direction in FIG. 3).

Also, in step (S2), the first image capture unit 200 and the second image capture unit 300 may capture images of an upper surface and a side surface of an edge of one side of the unit cell 10 moved to one side, respectively.

Also, in step (S3), the controller 400 may inspect whether the unit cell 10 is defective based on information of the upper surface and the side surface of the edge of the unit cell 10 image-captured in step (S2).

Here, whether the unit cell 10 is defective may be determined by comparing at least one of whether a burr has occurred, the length of the burr, the area of the burr, and the direction of the burr to a reference value.

That is, in step (S3), the controller 400 may preset a reference value (e.g., whether a burr has occurred and the length, area, and direction of the burr) for the burr formed on the positive electrode current collector 11a, and may determine whether the burr has been formed on the positive electrode current collector 11a (defective) by comparing the upper surface and the side surface of the edge of the unit cell 10 image-captured by the first image capture unit 200 and the second image capture unit 300 with the preset reference value, thereby determining whether the unit cell 10 is defective.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Unit cell
11: Positive electrode
11a: Positive electrode current collector 11b: Positive electrode material
12: Negative electrode
12a: Negative electrode current collector 12b: Negative electrode material
13: Separator
100: Support unit
200: First image capture unit
210: First camera unit
220: First lighting unit
221: 1a lighting unit 222: 1b lighting unit
300: Second image capture unit
310: Second camera unit
320: Second lighting unit
321: 2a lighting unit 322: 1b lighting unit
400: Controller

## Claims

1. A unit cell inspection apparatus for inspecting whether a burr has occurred on a cut surface of a unit cell, the unit cell inspection apparatus comprising:
a support unit configured to allow the unit cell to be seated thereon;
a first image capture unit configured to capture an image of an upper surface of an edge of the unit cell; and
a second image capture unit configured to capture an image of a side surface of the edge of the unit cell.

2. The unit cell inspection apparatus according to claim 1, wherein
the first image capture unit comprises a first camera unit configured to capture the image of the upper surface of the edge of the unit cell,
the second image capture unit comprises a second camera unit configured to capture the image of the side surface of the edge of the unit cell, and
the unit cell inspection apparatus comprises at least one of a first lighting unit configured to provide light toward the upper surface of the edge of the unit cell and a second lighting unit configured to provide light toward the side surface of the edge of the unit cell.

3. The unit cell inspection apparatus according to claim 2, wherein the second camera unit is disposed at an acute angle to the side surface of the edge of the unit cell.

4. The unit cell inspection apparatus according to claim 3, wherein each of the first lighting unit and the second lighting unit comprises a near-infrared (NIR) lighting device.

5. The unit cell inspection apparatus according to claim 4, wherein each of the first lighting unit and the second lighting unit comprises a lighting device configured to emit a wavelength of 840 to 950 nm.

6. The unit cell inspection apparatus according to claim 4, wherein
the first lighting unit is coaxially installed at the first camera unit, and
the second lighting unit is coaxially installed at the second camera unit.

7. The unit cell inspection apparatus according to claim 4, wherein each of the first camera unit and the second camera unit is provided with a filter configured to allow near-infrared (NIR) light to pass therethrough.

8. The unit cell inspection apparatus according to claim 7, wherein the filter transmits a wavelength of 840 to 950 nm.

9. The unit cell inspection apparatus according to claim 2, wherein the support unit is a conveyor.

10. The unit cell inspection apparatus according to claim 2, further comprising a controller configured to inspect whether the unit cell is defective based on information received from the first image capture unit and the second image capture unit.

11. The unit cell inspection apparatus according to claim 10, wherein the information received from the first image capture unit and the second image capture unit is at least one of whether a burr has occurred on a side surface and/or an upper surface of an edge of a positive electrode, a length of the burr, an area of the burr, and a direction of the burr.

12. The unit cell inspection apparatus according to claim 1, wherein the unit cell is any one of a monocell, an A-type bi-cell, a C-type bi-cell, and a half-cell.

13. A unit cell inspection method using the unit cell inspection apparatus according to any one of claims 1 to 12, the unit cell inspection method comprising:
(S1) seating a unit cell on the support unit;
(S2) capturing an image of the unit cell through the first image capture unit and the second image capture unit; and
(S3) inspecting whether the unit cell is defective through the controller.

14. The unit cell inspection method according to claim 13, wherein, in step (S3), whether the unit cell is defective is determined by comparing at least one of whether a burr has occurred, a length of the burr, an area of the burr, and a direction of the burr to a reference value.
